# EUROPÄISCHE PATENTSCHRIFT

(11) **EP 3 440 340 B1**
(45) Veröffentlichungstag und Bekanntmachung des Hinweises auf die Patenterteilung: **04.12.2019**
(21) Anmeldenummer: 17714184.3
(22) Anmeldetag: 28.03.2017
(51) Int. Cl.: F03B 3/00, F03B 3/16, F03B 11/00

(54) **RINGGATTER FÜR EINE HYDRAULISCHE MASCHINE UND VERFAHREN ZUM SCHLIESSEN**
RING GATE FOR A HYDRAULIC MACHINE AND METHOD FOR CLOSING
VANNE-FOURREAU D'UNE MACHINE HYDRAULIQUE ET PROCÉDÉ DE FERMETURE

(30) Priorität: 06.04.2016 DE 102016205647
(43) Veröffentlichungstag der Anmeldung: 13.02.2019
(73) Patentinhaber: Voith Patent GmbH, 89522 Heidenheim (DE)
(72) Erfinder: SCHABASSER, Martin, 3123 Pfaffing (AT)
(86) Internationale Anmeldenummer: PCT/EP2017/057266
(87) Internationale Veröffentlichungsnummer: WO 2017/174397

(56) Entgegenhaltungen:
- US-A- 107 007
- US-A- 121 195
- US-A- 480 929

## Beschreibung

Die vorliegende Erfindung betrifft ein Ringgatter bzw. ein Ring-gate für eine hydraulische Maschine mit einem Laufrad und einer Spirale, und ein Verfahren zum Schließen eines solchen Ringgatters. Das erfindungsgemäße Ringgatter kommt insbesondere bei Turbinen vom Typ Francis oder Kaplan und bei Pumpturbinen zur Anwendung.

Gattungsgemäße Ringgatter sind Verschlussorgane, welche zwischen einer Geöffnet-Position und einer Geschlossen-Position bewegt werden können, wobei die Zwischenpositionen nur durchlaufen werden, um die genannten Endpositionen anzufahren. D.h. solche Ringgatter werden nicht benutzt, um den Durchfluss durch die hydraulische Maschine zu regulieren. Gattungsgemäße Ringgatter sind aus dem Stand der Technik bekannt. Beispielhaft sei auf die US 107,007 und die US 3,489,391 verwiesen.

Einige der bekannten Probleme, die bei der Verwendung von gattungsgemäßen Ringgattern auftreten, sind erstens, dass Vibrationen entstehen, wenn das Ringgatter bei einem Notschluss in die Geschlossen-Position gefahren wird, und zweitens, dass hohe axiale Kräfte auf das Gatter wirken, wenn sich das Gatter der Geschlossen-Position nähert. Das letztgenannte Problem führt dazu, dass die Aktuatoren zum Bewegen des Ringgatters so ausgelegt werden müssen, dass diese hohen axialen Kräfte überwunden werden können, was hohe Kosten verursacht.

Der Erfinder hat sich die Aufgabe gestellt, ein Ringgatter und ein Verfahren zum Schließen desselben anzugeben, das die genannten Probleme verringert.

Diese Aufgabe wird durch die Merkmale der unabhängigen Ansprüche gelöst. Weitere vorteilhafte Ausführungsformen ergeben sich aus den davon abhängigen Unteransprüchen.

Der Erfinder hat erkannt, dass die genannten Probleme durch die hohe Nichtlinearität der Durchflusscharakteristik eines gewöhnlichen Ringgatters verursacht werden. Beim Schließen eines gewöhnlichen Ringgatters findet über 90% des Hubes kaum eine Drosselung des Durchflusses statt, wohingegen in den letzten 10% des Hubes die Durchflussänderung sehr stark ist. Bei einem gewöhnlichen Ringgatter hat dies zur Folge, dass man beim Schließen desselben einen Kompromiss eingehen muss. Auf der einen Seite will man schnell schließen, damit die Zeit mit den hohen Vibrationen kurz bleibt, auf der anderen Seite darf man nicht zu schnell schließen, sonst wird ein hoher Druckstoß generiert. Man könnte das Problem auch dadurch umgehen, dass man den Schließvorgang in zwei Phasen aufteilt, welche mit unterschiedlichen Schließgeschwindigkeiten durchlaufen werden. Doch ist das bei der Steuerung, die ein solches Ringgatter erfordert, nicht einfach umzusetzen und mit hohen Kosten verbunden. Der Erfinder hat sich daher entschlossen, einen anderen Weg zur Lösung zu beschreiten.

Der Erfinder hat erkannt, dass durch die Verwendung eines weiteren Bauteils die Charakteristik des Ringgatters deutlich linearisiert werden kann. In Zusammenwirkung mit dem neu eingeführten Bauteil kann beim Schließvorgang eine erste Phase realisiert werden, in der der Wasserfluss gedrosselt wird, wobei das Wasser gezwungen ist, durch Öffnungen im neu eingeführten Bauteil zu fließen. In der zweiten Phase werden die genannten Öffnungen geschlossen, wodurch der Wasserfluss komplett unterbunden wird.

Die erfindungsgemäße Lösung wird nachfolgend anhand von Figuren erläutert. Darin ist im Einzelnen folgendes dargestellt:
- Figur 1: Schnitt durch ein erfindungsgemäßes Ringgatter in einer ersten Ausführungsform;
- Figur 2: Schnitt durch ein erfindungsgemäßes Ringgatter in einer zweiten Ausführungsform;
- Figur 3: Schnitt durch ein erfindungsgemäßes Ringgatter gemäß der ersten Ausführungsform in Geöffnet- bzw. Geschlossen-Position;
- Figur 4: Schnitt durch ein erfindungsgemäßes Ringgatter gemäß der zweiten Ausführungsform in Geöffnet- bzw. Geschlossen-Position;
- Figur 5: Abfolge der Verfahrensschritte des erfindungsgemäßen Verfahrens zum Schließen des Ringgatters.

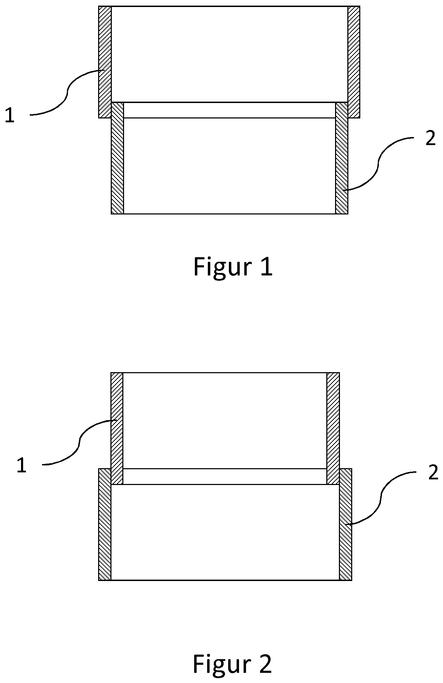

In Figur 1 ist ein Schnitt durch ein erfindungsgemäßes Ringgatter dargestellt. Das Ringgatter umfasst einen ersten Körper, welcher mit 1 bezeichnet ist. Dieser Körper 1 entspricht dem Schließkörper bei den bekannten Ringgattern des Standes der Technik. Körper 1 umschlingt die Laufradachse und ist in der Regel von hohlzylindrischer Form. Zum Schließen kann der Körper 1 in axialer Richtung (d.h. vertikal in Figur 1) bewegt werden, wobei der Körper 1 sich in der Regel in der Geöffnet-position befindet, wenn er sich in der oberen Position befindet. Beim Schließen wird er in die untere Position bewegt und verschließt in dieser Position den Durchfluss durch die hydraulische Maschine. Es sind jedoch auch Anordnungen denkbar, bei denen der Körper 1 zum Schließen nach oben bewegt wird. In der Darstellung der Figur 1 befindet sich der Körper 1 in der Geöffnet-Position. Das erfindungsgemäße Ringgatter umfasst einen weiteren Körper, welcher ebenfalls in der Regel von hohlzylindrischer Form ist, welcher mit 2 bezeichnet ist. Auch dieser Körper 2 kann in axialer Richtung bewegt werden und ist koaxial zum Körper 1 angeordnet, d.h. auch Körper 1 umschlingt die Laufradachse. Körper 2 kann in axialer Richtung eine erste (obere) Position einnehmen, in der er sich nicht im Wasserweg befindet, und eine zweite (untere) Position einnehmen, in der er sich im Wasserweg befindet. In Figur 1 befindet sich der Körper 2 in der unteren Position, d.h. im Wasserweg. In Figur 1 hat der Körper 2 einen kleineren Durchmesser als der Körper 1, so dass der Körper 2 in den Körper 1 hineingeschoben werden kann. Wenn der Körper 2 massiv ausgeführt wäre, würde er in der unteren Position den Wasserfluss auf gleiche Weise wie Körper 1 in der Geschlossen-Position komplett unterbrechen. Körper 2 ist jedoch so ausgebildet, dass er den Wasserfluss nicht komplett unterbrechen kann. Dies wird durch Öffnungen in der Wand von Körper 2 erreicht, durch die Wasser fließt, wenn sich der Körper 2 in der unteren Position befindet. Diese Öffnungen sind in den Figuren nicht dargestellt. Auf diese Weise wirkt der Körper 2 in seiner unteren Position, d.h. wenn er sich im Wasserweg befindet, als Drossel. Am einfachsten kann dieses Verhalten erzielt werden, wenn die Wand von Körper 2 mit gleichmäßig verteilten Löchern mit einem geeigneten Durchmesser versehen ist. Es kann sich jedoch auch um geeignet dimensionierte Schlitze oder anders ausgebildete Öffnungen handeln. Es ist auch denkbar und vorteilhaft, dass die Öffnungen nicht gleichmäßig verteilt sind (s.u.).

In Figur 2 ist ein erfindungsgemäßes Ringgatter in einer zweiten Ausführungsform dargestellt. Die Bezeichnungen entsprechen den Bezeichnungen aus Figur 1. Die zweite Ausführungsform unterscheidet sich von der ersten lediglich darin, dass nun der zweite Körper 2 einen größeren Durchmesser als Körper 1 aufweist. Die Anordnung der Körper zueinander entspricht ansonsten der Darstellung aus Figur 1.

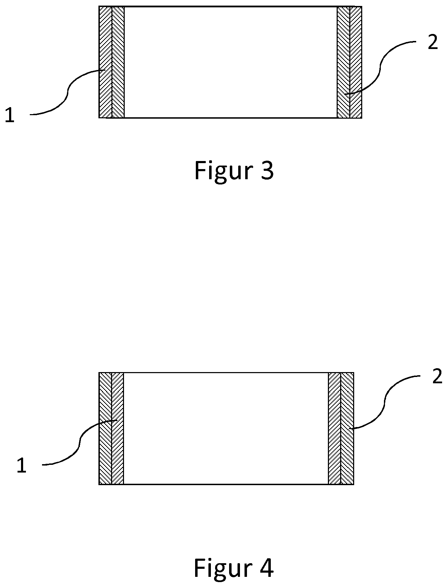

Die Darstellungen der Figuren 3 und 4 zeigen die entsprechenden Ausführungsformen der Figuren 1 und 2, wobei nun die beiden Körper komplett ineinander geschoben sind. Wenn die beiden Körper komplett ineinandergeschoben sind, kann sich das Ringgatter entweder in der Geöffnet- oder in der Geschlossen-Position befinden, je nachdem sich der erste Körper 1 in der Geöffnet- oder der Geschlossen-Position befindet. Anhand der beiden relativen Anordnungen von Figuren 1 bzw. 2 und 3 bzw. 4 kann nun die Wirkweise des erfindungsgemäßen Ringgatters näher erläutert werden.

Beim normalen Betrieb der hydraulischen Maschine, d.h. wenn das erfindungsgemäße Ringgatter komplett geöffnet ist, sind die beiden Körper 1 und 2 wie in Figur 3 bzw. 4 relativ zueinander angeordnet und Körper 1 befindet sich in seiner Geöffnet-Position, was impliziert, dass Körper 2 sich ebenfalls nicht im Wasserweg befindet. Soll das Ringgatter geschlossen werden, z.B. bei einem Notschluss, so wird zunächst Körper 2 in den Wasserweg eingefahren. Dadurch ergibt sich eine Anordnung gemäß Figur 1 bzw. 2. Körper 2 kann relativ zügig in den Wasserweg eingefahren werden, da sich durch die Öffnungen in der Wand von Körper 2 nur eine Drosselung des Durchflusses ergibt. D.h. die Gefahr für einen schädlichen Druckstoß ist viel geringer als beim Einfahren eines gewöhnlichen Ringgatters, das den Durchfluss komplett unterbricht. Wenn Körper 2 komplett in den Wasserweg eingefahren wurde, wird Körper 1 in die Geschlossen-Position gefahren. Auch diese Bewegung kann zügiger ausgeführt werden, da der Wasserdurchfluss schon bei der Bewegung von Körper 2 etwas gedrosselt wurde. Wenn Körper 1 seine Geschlossen-Position erreicht hat, sind die Körper zueinander wieder gemäß Figur 3 bzw. 4 angeordnet. Der Körper 1 verschließt in dieser Anordnung die Öffnungen in Körper 2 und der Wasserfluss ist somit unterbrochen.

Allein durch die Verteilung des Schließvorgangs auf die Bewegungen der beiden Körper 1 und 2 ergibt sich schon eine deutliche Linearisierung der Schließcharakteristik. Der Linearisierungsgrad kann durch die Größe, die Lage und die Verteilung der Öffnungen in der Wand von Körper 2 beeinflusst werden. Eine optimale Größe und Verteilung der Öffnungen in der Wand von Körper 2 kann leicht durch Simulationsrechnungen ermittelt werden. Es ist unmittelbar einsichtig, dass es vorteilhaft ist, wenn sich in der Nähe des Randes von Körper 2, der zuerst in den Wasserweg hineinbewegt wird (d.h. der Rand von Körper 2, der an den Wasserweg angrenzt, wenn sich Körper 2 außerhalb des Wasserweges befindet), weniger Öffnungen pro Flächeneinheit befinden als in der Nähe des anderen Randes. Durch eine solche Verteilung wird die Schließcharakteristik sowohl während der Bewegung von Körper 2 als auch bei der darauffolgenden Bewegung von Körper 1 linearer im Vergleich zum Fall, dass die Öffnungen in der Wand von Körper 2 homogen verteilt angeordnet sind. Ein ähnlicher Effekt kann auch erreicht werden, wenn die Größe der Öffnungen in Richtung des Randes, der sich zuerst in den Wasserweg hineinbewegt, kleiner wird (bei homogener Verteilung). Es können auch beide Variationen kombiniert werden, d.h. es kann sowohl die Größe der Öffnungen als auch die Verteilung derselben variiert werden.

Damit Körper 2 seine Drosselwirkung optimal ausüben kann, sollte das Ringgatter so ausgebildet sein, dass wenn sich Körper 2 im Wasserweg befindet, keine nennenswerte Menge an Wasser durch die hydraulische Maschine fließen kann, ohne die Öffnungen von Körper 2 zu passieren. Dies kann durch geeignete Dichtungen geschehen, die so angeordnet werden, dass sie einen solchen die Öffnungen von Körper 2 umgehenden Wasserfluss unterbinden.

Es ist im Sinne der vorliegenden Erfindung auch denkbar, dass sowohl Körper 1 als auch Körper 2 Öffnungen in den jeweiligen Wänden aufweisen. Die Öffnungen müssen in diesem Fall jedoch so angeordnet sein, dass eine vollständige Unterbrechung des Wasserflusses erfolgen kann. Das impliziert, dass der Abstand zwischen den beiden hohlzylindrischen Körpern nur sehr klein sein darf und keine Öffnung in Körper 1 mit einer Öffnung in Körper 2 überlappen darf, wenn die Körper wie in Figur 3 bzw. 4 angeordnet sind. Da diese Bedingungen technisch nur schwer realisiert werden können (insbesondere der gegen Null gehende Abstand zwischen den beiden Körpern), ist eine Ausführungsform mit massivem Körper 1 vorteilhafter. Auch im letzten Fall (d.h. mit massiven Körper 1) sollte der Abstand zwischen den beiden Körpern nicht zu groß sein, da in diesem Fall (d.h. wenn der Abstand nicht zu groß ist) die Drosselung des Wasserflusses bei der Bewegung von Körper 1 stark an den Hub von Körper 1 gekoppelt werden kann. Es gilt dabei die Faustregel, dass der Abstand zwischen Körper 1 und Körper 2 kleiner oder gleich der kleinsten Weite der Öffnungen in Körper 2 sein sollte. Aber es ist anzumerken, dass auch wenn diese Bedingung nicht erfüllt wird, sich eine Linearisierung der Schließcharakteristik ergeben kann - sie wird nur nicht optimal sein. Das Abstandsproblem kann auch mit Hilfe von Dichtungen zwischen Körper 1 und Körper 2 gelöst werden. Solche Dichtungen wären dann beispielsweise vorteilhaft am oberen Rand von Körper 2 und am unteren Rand von Körper 1 vorzusehen. Durch solche Dichtungen kann beim Ineinanderschieben der beiden Körper ein Wasserfluss durch die Öffnungen von Körper 2, welche bereits von Körper 1 abgedeckt werden, unterbunden werden, wodurch der Linearisierungseffekt verbessert wird.

Es ist anzumerken, dass der erfindungsgemäße Effekt auch erreicht werden kann, wenn die beiden Körper nicht von hohlzylindrischer Form sind. Sie können auch einen vom Kreis abweichenden Querschnitt aufweisen, z.B. oval sein. Die einzige Voraussetzung an die Form der Körper für das Funktionieren der bisher beschriebenen Ausführungsformen ist, dass die beiden Körper in axialer Richtung ineinandergeschoben werden können. Eine interessante Form stellt der hohle Kegelstumpf dar. Dabei können beide Körper eine solche Form haben oder nur einer der beiden, solange die Körper noch ineinander geschoben werden können. Der Vorteil liegt darin, dass die konische Form so gewählt werden kann, dass einer auftretenden radialen Deformation durch den Wasserdruck entgegengewirkt werden kann (höhere Steifigkeit). Da der Druck vor allem an dem Ende der Körper wirkt, die zuerst in den Wasserweg eintreten, kann eine Deformation auch in Kauf genommen werden, indem die Körper dort einen größeren Durchmesser aufwiesen, welcher durch den Wasserdruck elastisch wieder verkleinert wird. Auf diese Weise kann man auch erreichen, dass die effektive Weite des Spaltes zwischen den beiden Körpern beim Schließen näherungsweise konstant bleibt, was von Vorteil ist.

Eine weitere Variante der vorliegenden Erfindung besteht darin, dass Körper 1 und Körper 2 deckungsgleiche Öffnungen aufweisen. Beide Körper werden beim Schließen simultan in den Wasserweg eingefahren, wobei die Ausrichtung der Körper zueinander so ist, dass Wasser durch die deckungsgleichen Öffnungen strömen kann (d.h. sie sind beim Einfahren zueinander gemäß Figur 3 bzw. 4 angeordnet). Dadurch wird der Wasserfluss gedrosselt. Dann werden die beiden Körper so zueinander verdreht, dass die Öffnungen in beiden Körpern jeweils von der Wand des anderen Körpers abgedeckt werden, wodurch der Wasserfluss unterbrochen wird. Die Größe und Verteilung der Öffnungen in beiden Körpern muss daher so ausgeführt werden, dass dies möglich ist. In dieser Variante befindet sich Körper 1 in der Geöffnet-Position, wenn er sich nicht im Wasserweg befindet, und Körper 1 befindet sich in der Geschlossen-Position, wenn er sich im Wasserweg befindet und so zum Körper 2 ausgerichtet ist, dass die Öffnungen in beiden Körpern jeweils von der Wand des anderen Körpers abgedeckt werden. Eine Untervariante besteht darin, dass beide Körper konisch ausgeführt werden, d.h. sie haben die Form eines hohlen Kegelstumpfes. Dadurch werden die Körper steifer, was von Vorteil ist, da eine Deformation des Ringgatters beim Schließen zu einem Verklemmen desselben mit fatalen Folgen führen kann.

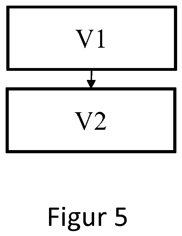

In Figur 5 ist die Abfolge der Verfahrensschritte des erfindungsgemäßen Schließverfahrens dargestellt. Dabei ist die Bewegung von Körper 2 in den Wasserweg hinein mit V1 bezeichnet und die Bewegung von Körper 1 in die Geschlossen-Position mit V2 bezeichnet. Die Verfahrensschritte müssen in dieser Reihenfolge durchgeführt werden. Ein gewisser zeitlicher Überlapp der beiden Bewegungen ist dabei jedoch tolerierbar, d.h. die Bewegung von Körper 1 (V2) kann bereits beginnen, wenn die Bewegung von Körper 2 (V1) noch nicht vollständig abgeschlossen ist. Im Allgemeinen muss V1 sowohl beginnen, bevor V2 beginnt, als auch abgeschlossen sein, bevor V2 abgeschlossen wird, um die erfindungsgemäße Linearisierung zu gewährleisten. Die jeweiligen optimalen Start und Endzeitpunkte und die Bewegungsgeschwindigkeiten der Körper 1 und 2 können wie üblich durch Simulation bestimmt werden.

Eine Öffnung des erfindungsgemäßen Ringgatters kann dagegen in beliebiger Reihenfolge erfolgen, da beim Öffnen einer gattungsgemäßen hydraulischen Maschine der Leitapparat geschlossen ist. Daher können die beiden Körper beim Öffnen auch simultan bewegt werden. Wäre der Leitapparat nicht geschlossen bzw. wäre kein Leitapparat vorhanden, dann würden hingegen prinzipiell die gleichen Bedingungen wie für das Schließen gelten.

## Patentansprüche

1. Hydraulische Maschine mit einem Laufrad, einer Spirale und einem Ringgatter zum Unterbrechen des Wasserflusses durch den Wasserweg der hydraulische Maschine, umfassend einen ersten hohlen die Laufradachse umschlingenden Körper (1), welcher so ausgeführt ist, dass er von einer Geöffnet- in eine Geschlossen-Position und zurück in axialer Richtung bewegt werden kann, wobei kein Wasserfluss durch die hydraulische Maschine erfolgen kann, wenn sich der erste Körper (1) in der Geschlossen-Position befindet, wobei das Ringgatter einen zweiten hohlen die Laufradachse umschlingenden Körper (2) umfasst, welcher so ausgeführt ist, dass er von einer ersten Position außerhalb des Wasserweges in eine zweite Position innerhalb des Wasserweges und zurück in axialer Richtung bewegt werden kann, wobei der zweite Körper (2) in seiner Wand Öffnungen aufweist, durch die Wasser fließen kann, wenn sich der zweite Körper (2) in der zweiten Position befindet, und sich der erste Körper (1) nicht in der Geschlossen-Position befindet.

2. Hydraulische Maschine nach Anspruch 1, wobei der Durchmesser vom ersten Körper (1) größer ist als der Durchmesser vom zweiten Körper (2).

3. Hydraulische Maschine nach Anspruch 1, wobei der Durchmesser vom ersten Körper (1) kleiner ist als der Durchmesser vom zweiten Körper (2).

4. Hydraulische Maschine nach einem der Ansprüche 1 bis 3, wobei die Öffnungen in der Wand des zweiten Körpers (2) homogen verteilt angeordnet sind.

5. Hydraulische Maschine nach einem der Ansprüche 1 bis 3, wobei die Öffnungen in der Wand des zweiten Körpers (2) inhomogen verteilt angeordnet sind.

6. Hydraulische Maschine nach Anspruch 5, wobei die Öffnungen in der Wand des zweiten Körpers (2) so angeordnet sind, dass die Anzahl der Öffnungen pro Fläche in der Nähe des Randes des zweiten Körpers (2), welcher an den Wasserweg angrenzt, wenn sich der zweite Körper (2) in der ersten Position befindet, größer ist als in der Nähe des anderen Randes des zweiten Körpers (2).

7. Hydraulische Maschine nach einem der Ansprüche 1 bis 6, wobei die Öffnungen in der Wand des zweiten Körpers (2) die gleiche Größe haben.

8. Hydraulische Maschine nach einem der Ansprüche 1 bis 6, wobei die Öffnungen in der Wand des zweiten Körpers (2) unterschiedliche Größen haben.

9. Hydraulische Maschine nach Anspruch 8, wobei die Öffnungen in der Wand des zweiten Körpers (2) so ausgebildet sind, dass die Größe der Öffnungen in der Nähe des Randes des zweiten Körpers (2), welcher an den Wasserweg angrenzt, wenn sich der zweite Körper (2) in der ersten Position befindet, kleiner ist als in der Nähe des anderen Randes des zweiten Körpers (2).

10. Hydraulische Maschine nach einem der vorangehenden Ansprüche, wobei Dichtungen vorgesehen sind, die so angeordnet sind, dass sie einen Wasserfluss durch die hydraulische Maschine unterbinden, welcher nicht die Öffnungen vom zweiten Körper (2) passiert, wenn sich dieser in der zweiten Position befindet.

11. Hydraulische Maschine nach einem der Ansprüche 1 bis 10, wobei der erste und/oder der zweite Körper (1, 2) von hohlzylindrischer Form sind.

12. Hydraulische Maschine nach einem der Ansprüche 1 bis 11, wobei der erste und/oder der zweite Körper (1, 2) die Form eines hohlen Kegelstumpfes aufweisen.

13. Verfahren zum Schließen eines Ringgatters einer hydraulischen Maschine gemäß einem der vorangehenden Ansprüche, wobei das Verfahren folgende Schritte umfasst: Bewegen des zweiten Körpers (2) von der ersten Position in die zweite Position (V1); Bewegen des ersten Körpers (1) von der Geöffnet- in die Geschlossen-Position (V2); wobei die Bewegung (V1) des zweiten Körpers (2) beginnt, bevor die Bewegung (V2) des ersten Körpers (1) beginnt, und die Bewegung (V1) des zweiten Körpers (2) abgeschlossen wird, bevor die Bewegung (V2) des ersten Körpers (1) abgeschlossen wird.

14. Verfahren gemäß Anspruch 13, wobei die Bewegung (V2) des ersten Körpers (1) erst beginnt, wenn die Bewegung (V1) des zweiten Körpers (2) abgeschlossen ist.

## Claims

1. Hydraulic machine having an impeller, a volute and a ring gate for interrupting the water flow through the water path of the hydraulic machine, comprising a first hollow body (1) which wraps around the impeller axis and is configured in such a way that it can be moved in the axial direction from an open position into a closed position and back, it not being possible for any water flow to take place through the hydraulic machine when the first body (1) is situated in the closed position, the ring gate comprising a second hollow body (2) which wraps around the impeller axis and is configured in such a way that it can be moved in the axial direction from a first position outside the water path into a second position within the water path and back, the second body (2) having openings in its wall, through which openings water can flow when the second body (2) is situated in the second position and the first body (1) is not situated in the closed position.

2. Hydraulic machine according to Claim 1, the diameter of the first body (1) being greater than the diameter of the second body (2).

3. Hydraulic machine according to Claim 1, the diameter of the first body (1) being smaller than the diameter of the second body (2).

4. Hydraulic machine according to one of Claims 1 to 3, the openings in the wall of the second body (2) being arranged in a homogeneously distributed manner.

5. Hydraulic machine according to one of Claims 1 to 3, the openings in the wall of the second body (2) being arranged in an inhomogeneously distributed manner.

6. Hydraulic machine according to Claim 5, the openings in the wall of the second body (2) being arranged in such a way that the number of openings per unit area in the vicinity of that edge of the second body (2) which adjoins the water path when the second body (2) is situated in the first position is greater than in the vicinity of the other edge of the second body (2).

7. Hydraulic machine according to one of Claims 1 to 6, the openings in the wall of the second body (2) having the same size.

8. Hydraulic machine according to one of Claims 1 to 6, the openings in the wall of the second body (2) having different sizes.

9. Hydraulic machine according to Claim 8, the openings in the wall of the second body (2) being configured in such a way that the size of the openings in the vicinity of that edge of the second body (2) which adjoins the water path when the second body (2) is situated in the first position is smaller than in the vicinity of the other edge of the second body (2).

10. Hydraulic machine according to one of the preceding claims, seals being provided which are arranged in such a way that they prevent a water flow through the hydraulic machine, which water flow does not pass the openings of the second body (2), when the said second body (2) is situated in the second position.

11. Hydraulic machine according to one of Claims 1 to 10, the first and/or the second body (1, 2) being of hollow-cylindrical shape.

12. Hydraulic machine according to one of Claims 1 to 11, the first and/or the second body (1, 2) having the shape of a hollow truncated cone.

13. Method for closing a ring gate of a hydraulic machine according to one of the preceding claims, the method comprising the following steps: moving of the second body (2) from the first position into the second position (V1); moving of the first body (1) from the open position into the closed position (V2); the movement (V1) of the second body (2) beginning before the movement (V2) of the first body (1) begins, and the movement (V1) of the second body (2) being concluded before the movement (V2) of the first body (1) is concluded.

14. Method according to Claim 13, the movement (V2) of the first body (1) beginning only when the movement (V1) of the second body (2) is concluded.

## Revendications

1. Machine hydraulique comprenant une roue mobile, une spirale et une vanne-fourreau pour interrompre l'écoulement d'eau à travers la voie d'écoulement d'eau de la machine hydraulique, comprenant un premier corps creux (1) enveloppant l'axe de la roue mobile, lequel est réalisé de manière à pouvoir être déplacé dans la direction axiale d'une position ouverte dans une position fermée et inversement, aucun écoulement d'eau ne pouvant s'effectuer à travers la machine hydraulique lorsque le premier corps (1) se trouve dans la position fermée, la vanne-fourreau comprenant un deuxième corps creux (2) enveloppant l'axe de la roue mobile, lequel est réalisé de manière à pouvoir être déplacé d'une première position à l'extérieur de la voie d'écoulement d'eau dans une deuxième position à l'intérieur de la voie d'écoulement d'eau et inversement dans la direction axiale, le deuxième corps (2) présentant dans sa paroi des ouvertures à travers lesquelles de l'eau peut s'écouler lorsque le deuxième corps (2) se trouve dans la deuxième position, et que le premier corps (1) ne se trouve pas dans la position fermée.

2. Machine hydraulique selon la revendication 1, dans laquelle le diamètre du premier corps (1) est supérieur au diamètre du deuxième corps (2).

3. Machine hydraulique selon la revendication 1, dans laquelle le diamètre du premier corps (1) est inférieur au diamètre du deuxième corps (2).

4. Machine hydraulique selon l'une quelconque des revendications 1 à 3, dans laquelle les ouvertures dans la paroi du deuxième corps (2) sont disposées de manière répartie de manière homogène.

5. Machine hydraulique selon l'une quelconque des revendications 1 à 3, dans laquelle les ouvertures dans la paroi du deuxième corps (2) sont disposées de manière répartie de manière non homogène.

6. Machine hydraulique selon la revendication 5, dans laquelle les ouvertures dans la paroi du deuxième corps (2) sont disposées de telle sorte que le nombre des ouvertures par surface à proximité du bord du deuxième corps (2) qui est adjacent à la voie d'écoulement d'eau lorsque le deuxième corps (2) se trouve dans la première position est plus important qu'à proximité de l'autre bord du deuxième corps (2).

7. Machine hydraulique selon l'une quelconque des revendications 1 à 6, dans laquelle les ouvertures dans la paroi du deuxième corps (2) présentent la même taille.

8. Machine hydraulique selon l'une quelconque des revendications 1 à 6, dans laquelle les ouvertures dans la paroi du deuxième corps (2) présentent des tailles différentes.

9. Machine hydraulique selon la revendication 8, dans laquelle les ouvertures dans la paroi du deuxième corps (2) sont réalisées de telle sorte que la taille des ouvertures à proximité du bord du deuxième corps (2) qui est adjacent à la voie d'écoulement d'eau lorsque le deuxième corps (2) se trouve dans la première position soit plus petite qu'à proximité de l'autre bord du deuxième corps (2) .

10. Machine hydraulique selon l'une quelconque des revendications précédentes, dans laquelle des joints d'étanchéité sont prévus, lesquels sont disposés de manière à supprimer un écoulement d'eau à travers la machine hydraulique, lequel ne passe pas à travers les ouvertures du deuxième corps (2) lorsque celui-ci se trouve dans la deuxième position.

11. Machine hydraulique selon l'une quelconque des revendications 1 à 10, dans laquelle le premier et/ou le deuxième corps (1, 2) présentent une forme cylindrique creuse.

12. Machine hydraulique selon l'une quelconque des revendications 1 à 11, dans laquelle le premier et/ou le deuxième corps (1, 2) présentent la forme d'un tronc de cône creux.

13. Procédé de fermeture d'une vanne-fourreau d'une machine hydraulique selon l'une quelconque des revendications précédentes, le procédé comprenant les étapes suivantes :
déplacement du deuxième corps (2) de la première position dans la deuxième position (V1) ; déplacement du premier corps (1) de la position ouverte dans la position fermée (V2) ; le déplacement (V1) du deuxième corps (2) commençant avant que le déplacement (V2) du premier corps (1) ne commence, et le déplacement (V1) du deuxième corps (2) étant terminé avant que le déplacement (V2) du premier corps (1) ne soit terminé.

14. Procédé selon la revendication 13, le déplacement (V2) du premier corps (1) commençant seulement lorsque le déplacement (V1) du deuxième corps (2) est terminé.
